# EUROPEAN PATENT APPLICATION

(11) **EP 4 518 214 A1**
(43) Date of publication of application: **05.03.2025**
(21) Application number: 22939099.2
(22) Date of filing: 28.04.2022
(51) Int. Cl.: H04L 5/00, H04W 24/02

(54) **METHOD AND APPARATUS FOR TRANSMITTING CONFIGURATION INFORMATION, AND READABLE STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2022/089926
(87) International publication number: WO 2023/206247

(57) **Abstract**

The present disclosure is applied to the technical field of wireless communications. Provided are a method and apparatus for transmitting configuration information, and a readable storage medium. The method comprises: receiving first configuration information, wherein the first configuration information is used for configuring N search space sets which have a link relationship, the N search space sets which have a link relationship respectively correspond to respective PDCCH candidates, and the PDCCH candidates are used for transmitting PDCCHs, N being an integer greater than 1. In the present disclosure, a network device sends first configuration information to a user device to explicitly indicate N search space sets which have a link relationship, such that after learning that the network device is configured with different numbers of TCI state sets, the user device uses different blind detection modes to receive PDCCHs on the N search space sets which have a link relationship. In this way, in a scenario where N search space sets have a link relationship, a user device and a network device have consistent awareness regarding the reception of PDCCHs, thereby improving the transmission quality of the PDCCHs.

## Description

### TECHNICAL FIELD

The disclosure relates to a field of wireless communication technology, in particular to a method for transmitting configuration information, an apparatus for transmitting configuration information, and a readable storage medium.

### BACKGROUND

In the high-frequency channel of some wireless communication systems, due to the rapid attenuation of the high-frequency channel, a beam-based transmission or reception method is required to ensure a coverage range. For example, in the FR2 frequency band of the air interface (NR), the beam-based transmission or reception method may be used. Some channels and reference signals may be transmitted based on beams, and the corresponding beams are independently indicated. For example:

The channels may include: a physical downlink control channel (PDCCH), a physical downlink share channel (PDSCH), a physical uplink control channel (PUCCH), a physical uplink share channel (PUSCH).

The reference signals may include: a channel state information-reference signal (CSI-RS), a sounding reference signal (SRS), a positioning reference signal (PRS), a timing reference signal (TRS), etc.

The CSI-RS includes CSI-RS for channel state information measurement, or CSI-RS for beam measurement, or CSI-RS for pathloss estimation; the SRS includes SRS for codebook-based or non-codebook-based channel state information measurement, SRS for beam measurement, or SRS for positioning measurement. PDCCH and PUCCH activate the corresponding beams through a media access control control element (MAC CE), and PDSCH and PUSCH indicate their respective corresponding beams through downlink control information (DCI) signaling.

When indicating the beam, a transmission configuration indication (TCI) state may be configured to inform a user equipment (UE) to use a receiving beam same with which synchronization signal block (SSB) or the CSI-RS the base station sends to receive the PDCCH or PDSCH, or to inform the UE to use transmitting beam same with which the reference signal the base station sends to send the PUCCH or PUSCH.

In order to reduce signaling overhead, a unified TCI state may be configured to simultaneously indicate the TCI states of a plurality of channels and reference signals. The unified TCI state may indicate the uplink TCI state separately, or indicate the downlink TCI state separately, may also perform a joint indication of the uplink and the downlink. For example:

when the base station indicates a unified TCI state for downlink, this TCI state may simultaneously indicate the PDSCH, the PDCCH, and the CSI-RS;

when the base station indicates a unified TCI state for uplink, this TCI state may be configured to indicate the PUSCH, the PUCCH, and the SRS;

If the base station indicates a joint TCI state, this TCI state may simultaneously indicate at least one uplink channel or reference signal and at least one downlink channel or reference signal.

The base station may use single transmission reception point (S -TRP) means to provide services to the UE, or use multiple transmission reception point (M-TRP) means with a plurality of TRPs to provide services to the UE, which includes using a plurality of TRPs to send the PDCCH for the terminal.

In the way of the S-TRP, each DCI indicates a unified TCI state set (also known as a set of unified TCI states). However, in the way of the M-TRP, each DCI may indicate a plurality of unified TCI state sets (also known as a set of unified TCI states), so how to receive the channel or the reference signal through a plurality of unified TCI state sets indicated by one DCI in the way of the M-TRP is a technical problem that needs to be solved

### SUMMARY

The disclosure provides a method for transmitting configuration information, an apparatus for transmitting configuration information, and a readable storage medium.

According to a first aspect of the disclosure, a method for receiving configuration information is provided and performed by a user equipment (UE), and the method includes:

receiving first configuration information, in which the first configuration information is configured to configure N search space (SS) sets with a link relationship, the N SS sets with the link relationship correspond to physical downlink control channel (PDCCH) candidates, respectively, and the PDCCH candidate is configured for PDCCH transmission, where N is an integer greater than 1.

In some possible implementations, the method further includes:
receiving first indication information for indicating N transmission configuration indication (TCI) state sets; and
monitoring the PDCCH on the PDCCH candidate based on the N TCI state sets.

In some possible implementations, monitoring the PDCCH on the PDCCH candidate based on the N TCI state sets includes:
monitoring the PDCCH on the PDCCH candidate based on a joint TCI state and/or a downlink TCI state in the N TCI state sets.

In some possible implementations, monitoring the PDCCH on the PDCCH candidate based on the N TCI state sets includes:
determining the PDCCH candidate corresponding to each TCI state set; and
monitoring, based on each TCI state set, the PDCCH on the PDCCH candidate corresponding to the TCI state set.

In some possible implementations, the method further includes:
each TCI state set in the N TCI state sets only includes a joint TCI state;
or, each TCI state set in the N TCI state sets only includes at least one of a downlink TCI state or an uplink TCI state.

In some possible implementations, the method further includes:
a first TCI state set in the N TCI state sets only includes a joint TCI state; and
a second TCI state set in the N TCI state sets only includes at least one of a downlink TCI state or an uplink TCI state.

In some possible implementations, the method further includes:
each TCI state in the N TCI state sets is configured for a transmission of at least one channel and/or signal; the channel includes at least one of a PDCCH, a physical downlink share channel (PDSCH), a physical uplink control channel (PUCCH), or a physical uplink share channel (PUSCH); and the signal includes at least one of a channel state information-reference signal (CSI-RS) or a sounding reference signal (SRS).

In some possible implementations, the method further includes: receiving first indication information for indicating one TCI state set; and monitoring the PDCCH on the PDCCH candidate based on the one TCI state set.

In some possible implementations, monitoring the PDCCH on the PDCCH candidate based on the one TCI state set includes: monitoring the PDCCH on the PDCCH candidate based on a joint TCI state and/or a downlink TCI state in the one TCI state set.

In some possible implementations, monitoring the PDCCH on the PDCCH candidate based on the one TCI state set includes: determining a first PDCCH candidate corresponding to the one TCI state set; and monitoring the PDCCH on the first PDCCH candidate based on the one TCI state set.

In some possible implementations, the method further includes: after monitoring the PDCCH on the first PDCCH candidate based on the one TCI state set, accumulating 1 on a blind detection count of a first SS set corresponding to the first PDCCH candidate.

In some possible implementations, the method further includes: withholding performing accumulation on a blind detection count of an SS set corresponding to a PDCCH candidate other than the first PDCCH candidate.

In some possible implementations, the method further includes: accumulating 1 on a blind detection count of a first SS set corresponding to the first PDCCH candidate, and withholding performing accumulation on a blind detection count of a second SS set corresponding to a second PDCCH candidate.

In some possible implementations, the first indication information includes a media access control control element (MAC CE), or the first indication information includes an MAC CE and downlink control information (DCI).

In some possible implementations, the first indication information includes a group identity corresponding to each TCI state set.

In some possible implementations, the group identity includes at least one of: a control resource set (CORESET) pool index, or a CORESET group identity, or a PUCCH group identity.

According to a second aspect of the disclosure, a method for sending configuration information is provided and performed by a network device, and the method includes:
sending first configuration information, in which the first configuration information is configured to configure N SS sets with a link relationship, the N SS sets with the link relationship correspond to respective PDCCH candidates, respectively, and the PDCCH candidate is configured to transmit PDCCH, where N is an integer greater than 1.

In some possible implementations, the method further includes: sending first indication information for indicating N TCI state sets.

In some possible implementations, each TCI state set in the N TCI state sets only includes a joint TCI state; or, each TCI state set in the N TCI state sets only includes at least one of a downlink TCI state or an uplink TCI state.

In some possible implementations, a first TCI state set in the N TCI state sets only includes a joint TCI state; and a second TCI state set in the N TCI state sets only includes at least one of a downlink TCI state or an uplink TCI state.

In some possible implementations, each TCI state in the N TCI state sets is configured to a transmission of at least one channel and/or signal, the channel includes at least one of a PDCCH, a PDSCH, a PUCCH, or a PUSCH; and the signal includes at least one of a CSI-RS or a SRS.

In some possible implementations, sending first indication information for indicating one TCI state set.

In some possible implementations, the first indication information includes a MAC CE, or the first indication information includes an MAC CE and DCI.

In some possible implementations, the first indication information includes a group identity corresponding to each TCI state set.

In some possible implementations, the group identity includes at least one of: a CORESET pool index, or a CORESET group identity, or a PUCCH group identity.

According to a third aspect of the disclosure, a communication apparatus is provided. The communication apparatus is configured to perform the steps performed by the UE in the above first aspect or any possible designs of the above first aspect. The UE may achieve the functions of the above methods through a form of hardware structure, software modules, or a combination of hardware structure and software modules.

When implementing the communication apparatus shown in the first aspect through software modules, the communication apparatus may include a transceiver module, and the transceiver module is configured for receiving first configuration information, in which the first configuration information is configured to configure N SS sets with a link relationship, the N SS sets with the link relationship correspond to respective PDCCH candidates, respectively, and the PDCCH candidate is configured to transmit PDCCH, where N is an integer greater than 1.

According to a fourth aspect of the disclosure, a communication apparatus is provided. The communication apparatus is configured to perform the steps performed by the network device in the above second aspect or any possible designs of the above second aspect. The network device may achieve the functions of the above methods through a form of hardware structure, software modules, or a combination of hardware structure and software modules.

When implementing the communication apparatus shown in the second aspect through software modules, the communication apparatus may include a transceiver module, and the transceiver module is configured for receiving first configuration information, in which the first configuration information is configured to configure N SS sets with a link relationship, the N SS sets with the link relationship correspond to respective PDCCH candidates, respectively, and the PDCCH candidate is configured to transmit PDCCH, where N is an integer greater than 1.

According to a fifth aspect of the disclosure, a communication apparatus is provided. The communication apparatus includes a processor and a memory; in which the memory is configured to store a computer program; and the processor is configured to execute the computer program to implement the first aspect or any possible designs of the first aspect.

According to a sixth aspect of the disclosure, a communication apparatus is provided. The communication apparatus includes a processor and a memory; in which the memory is configured to store a computer program; and the processor is configured to execute the computer program to implement the second aspect or any possible designs of the second aspect.

According to a seventh aspect of the disclosure, a computer-readable storage medium having an instruction (also known as a computer program, or a program) stored thereon, when the instruction is called and executed on a computer, the computer performs the first aspect or any possible designs of the first aspect.

According to an eighth aspect of the disclosure, a computer-readable storage medium having an instruction (also known as a computer program, or a program) stored thereon, when the instruction is called and executed on a computer, the computer performs the second aspect or any possible designs of the second aspect.

It should be understood that the above general description and the following detailed descriptions are exemplary and explanatory only and do not limit the embodiments of the disclosure.

According to the disclosure, the network device send the first configuration information to the UE to clearly indicate N SS sets with the link relationship, so that the UE knows the different number of TCI state sets configured by the network device, and uses different blind detection methods to receive the PDCCH on the N SS sets with the link relationship, which enable the UE and the network device to have a consistent recognition of receiving the PDCCH in the scenario where the N SS sets have the link relationship, thus improving a transmission quality of the PDCCH.

### BRIEF DESCRIPTION OF THE DRAWINGS

The accompanying drawings described here are used to provide further understanding of embodiments of the disclosure and form a part of the application. The illustrative embodiments or the embodiments of the disclosure and their descriptions are used to explain the embodiments of the disclosure and do not constitute undue limitations on the embodiments of the disclosure. In the accompanying drawings:

The accompanying drawings, which are incorporated in and constitute a part of this specification, illustrate embodiments consistent with the embodiments of the disclosure and together with the specification serve to explain the principles of the embodiments of the disclosure.
FIG. 1 is a schematic diagram of a wireless communication system according to an exemplary embodiment.
FIG. 2 is a schematic diagram of a method for transmitting configuration information according to an exemplary embodiment.
FIG. 3 is a schematic diagram of a method for receiving configuration information according to an exemplary embodiment.
FIG. 4 is a schematic diagram of a method for sending configuration information according to an exemplary embodiment.
FIG. 5 is a schematic diagram of an apparatus for receiving configuration information according to an exemplary embodiment.
FIG. 6 is a schematic diagram of another apparatus for receiving configuration information according to an exemplary embodiment.
FIG. 7 is a schematic diagram of an apparatus for sending configuration information according to an exemplary embodiment.
FIG. 8 is a schematic diagram of another apparatus for sending configuration information according to an exemplary embodiment.

### DETAILED DESCRIPTION

Further explanation of embodiments of the disclosure will be provided in conjunction with the accompanying drawings and specific implementations.

Exemplary embodiments will be described in detail, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the embodiments of the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various types of information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein can be interpreted as "when", "while" or "in response to determining".

The following provides a detailed description of the embodiments of the present disclosure, examples of which are shown in the accompanying drawings, where the same or similar reference numbers throughout indicate the same or similar elements. The embodiments described below with reference to the accompanying drawings are exemplary and intended to explain the disclosure, and should not be construed as limiting the disclosure.

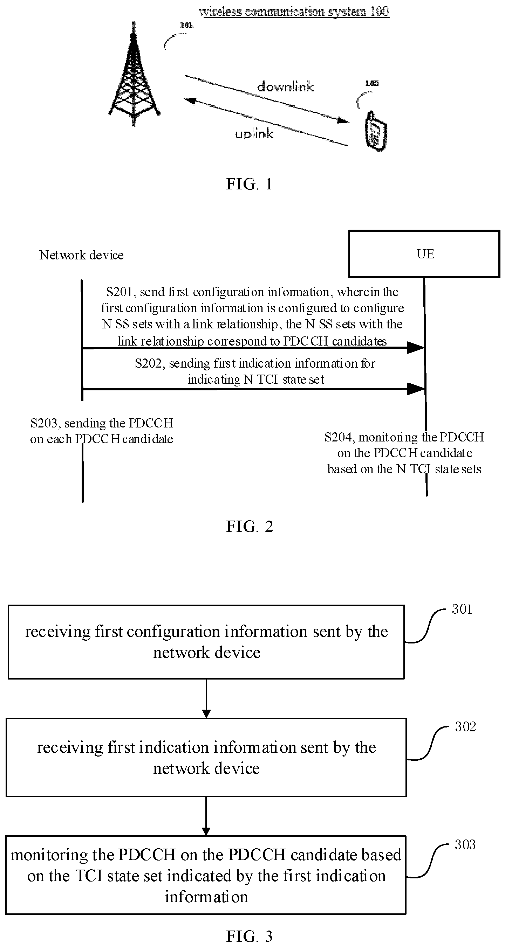

As illustrated in FIG. 1, a method for transmitting configuration information provided by the embodiments of the disclosure may be applied to a wireless communication system 100, which may include, but is not limited to, a network device 101 and a user equipment (UE) 102, The UE 102 is configured to support carrier aggregation. The UE 102 is capably to be connected to a plurality of carrier units of the network device 101, including a primary carrier unit and one or more auxiliary carrier units.

It should be understood that the above wireless communication system 100 may be applied to both low-frequency and high-frequency scenarios. The application scenarios of the wireless communication system 100 include but are not limited to a long term evolution (LTE) system, a LTE frequency division duplex (FDD) system, a LTE time division duplex (TDD) system, a worldwide interoperability for micro wave access (WiMAX) communication system, a cloud radio access network (CRAN) system, a future 5th-Generation (5G) system, a new radio (NR) communication system, or a future evolved public land mobile network (PLMN) system.

The UE 102 shown above may be a user equipment (UE), a terminal, an access terminal, a terminal unit, a terminal station, a mobile station (MS), a remote station, a remote terminal, a mobile terminal, a wireless communication device, a terminal agent, or a user device. The UE 102 may have wireless transmission and reception capabilities, which may communicate with one or more network devices 101 of one or more communication systems (such as wireless communication) and receive network services provided by the network device 101, in which the network device 101 includes but not limited to a base station illustrated.

The UE 102 may be a cellular phone, a cordless phone, a session initiation protocol (SIP) phone, a wireless local loop (WLL) station, a personal digital assistant (PDA) device, a handheld device with wireless communication capabilities, a computing device or other processing device connected to a wireless modem, a vehicle-mounted device, a wearable device, a UE in future 5G network, or a UE in future evolved PLMN networks.

The network device 101 maybe an access network device (or referred to as an access network point). The access network device refers to a device provided with network access functions, such as a radio access network (RAN) base stations, etc. The network device may specifically include a base station (BS) device, or include a base station device and a wireless resource management device for controlling the base station device. The network device may also include a relay station (relay device), an access point, and a base station in the future 5G network, and a base station in the future evolved PLMN network, or a NR base station. The network device may be a wearable device or a vehicle-mounted device. The network device may also be a communication chip with a communication module.

For example, the network device 101 includes but is not limited to: a gnodeB (gNB) in 5G, an evolved node B (eNB) in a LTE system, a radio network controller (RNC), a node B (NB) in a WCDMA system, a wireless controller in a CRAN system, a base station controller (BSC), a base transceiver station (BTS) in a GSM system or a CDMA system, and a home base stations (e.g, a home evolved nodeB, or a home node B (HNB)), a baseband unit (BBU), a transmitting and receiving point (TRP), a transmitting point (TP), or a mobile switching center.

Given that when using multiple transmission reception point (M-TRP) with single downlink control information (Single-DCI, S-DCI), each DCI is able to schedule a plurality of TRP channels (such as a physical downlink control channel (PDCCH), a physical downlink share channel (PDSCH), a physical uplink control channel (PUCCH), a physical uplink share channel (PUSCH), etc.) and/or signals, and one DCI signaling is able to indicate a plurality of unified transmission configuration indication (TCI) state sets (also known as a plurality of sets of unified TCI state).

Moreover, a search space set (SS set) with a link relationship may be configured for the UE. For example, if two SS sets have a link relationship, it can be understood that different SS sets have a candidate resource for PDCCH repetition. For example, two SS sets with the link relationship include a first SS set and a second SS set. The first SS set includes a first PDCCH candidate, and the second SS set includes a second PDCCH candidate. The first PDCCH candidate in the first SS set and the second PDCCH candidate in the second SS set are configured for the transmission of one PDCCH.

Considering that the PDSCH, the PUSCH (excluding configured grant type 1), and the PUCCH may all support dynamic switching between single transmission reception point (S - TRP) and M-TRP, but the PDCCH does not support dynamic switching between the S-TRP and the M-TRP.

So for PDCCH, the base station may configure two or more SS sets with a link relationship through a radio resource control (RRC) signaling. When one DCI only indicates one unified TCI state set, it will not be possible to determine how to receive the PDCCH corresponding to the two or more SS sets configured with the linked relationship. Moreover, when one DCI indicates two unified TCI state sets and two SS sets with the linked relationship, it will be impossible to determine how to receive the PDCCH corresponding to the two SS sets configured with the linked relationship, as a mapping relationship between the two PDCCH candidates and the two TCI states is unknown.

A method for receiving configuration information is provided according to the embodiments of the disclosure. FIG. 2 is a schematic diagram of a method for transmitting configuration information according to an exemplary embodiment. As illustrated in FIG. 2, the method includes the following steps S201-S203.

At step S201, the network device 101 send first configuration information to the UE 102.

The first configuration information is configured to configure N SS sets with a link relationship, the N SS sets with the link relationship correspond to respective PDCCH candidates, respectively, and the PDCCH candidate is configured to transmit PDCCH, where N is an integer greater than 1.

In some possible implementations, this method is applied to a usage scenario of M-TRP based on S-DCI.

In some possible implementations, the value of N is 2.

At step S202, the network device 101 sends first indication information to the UE 102.

In some possible implementations, the first indication information includes media access control control element (MAC CE).

In some possible implementations, the first indication information includes MAC CE and downlink control information (DCI).

In some possible implementations, the first indication information is configured to indicate N TCI state sets.

In some possible implementations, the first indication information includes a group identifier corresponding to each TCI state set. The group identifier includes at least one of the following: a control resource set (CORESET) pool index, or a CORESET group identity, or a PUCCH group identity.

In some possible implementations, each TCI state in the N TCI state sets is configured to a transmission of at least one channel and/or signal. The channel includes at least one of a PDCCH, a PDSCH, a PUCCH, or a PUSCH. The signal includes at least one of a channel state information-reference signal (CSI-RS) or a sounding reference signal (SRS).

In an example, each TCI state set in the N TCI state sets includes one or a pair of TCI states.

For example, one TCI state set includes a joint TCI state (also known as DLorJointTCI state), where the joint TCI state may be used for transmission of both uplink and downlink channels and/or signals.

For example, one TCI state set includes a downlink TCI state (also known as DLorJointTCI state), where the downlink TCI state may be used for the transmission of downlink channels and/or signals.

For example, one TCI state set includes an uplink TCI state (also known as UL-TCI state), where the uplink TCI state may be used for the transmission of uplink channels and/or signals.

For example, one TCI state set includes a pair of TCI states, which includes a downlink TCI state (also known as DLorJointTCI state) and an uplink TCI state. The downlink TCI state may be used for the transmission of downlink channels and/or signals, while the uplink TCI state may be used for the transmission of uplink channels and/or signals.

In an example, each TCI state set in the N TCI state sets only includes a joint TCI state (also known as DLorJointTCI state); or, each TCI state set in the N TCI state sets only includes at least one of a downlink TCI state (also known as DLorJointTCI state) or an uplink TCI state (also known as UL-TCI state).

In this example, if the TCI state is divided into two types, the first type is the joint TCI state, and the second type is a non-joint TCI state (which may be referred to as separate UL/DL TCI state). Each TCI state set in the N TCI state sets includes the TCI state with the same type, that is, all joint TCI states, or all non-joint TCI states.

In another example, a first TCI state set in the N TCI state sets only includes a joint TCI state; a second TCI state set in the N TCI state sets only includes at least one of a downlink TCI state and an uplink TCI state.

In this example, if the TCI state is divided into two types, the first type is the joint TCI state, and the second type is the non-joint TCI state (which may be referred to as separate UL/DL TCI state), at least two TCI state sets in the N TCI state sets contain different TCI state types.

In some possible implementations, the first indication information is configured to indicate one TCI state set.

It should be noted that this method does not limit the sending order of steps S201 and S202, and may send step S202 first and then send step S201.

Step S203, the network device 101 sends the PDCCH on each PDCCH candidate.

Step S204, the UE 102 monitors the PDCCH on the PDCCH candidate based on the TCI state set indicated by the first indication information.

When the first indication information indicates the N TCI state sets, the UE 102 monitors the PDCCH on the PDCCH candidate based on the N TCI state sets.

In a possible implementation, monitoring the PDCCH on the PDCCH candidate based on the N TCI state sets includes: determining the PDCCH candidate corresponding to each TCI state set; and monitoring the PDCCH of the corresponding PDCCH candidate based on each TCI state set.

In an example, the value of N is 2, and the first indication information indicates 2 TCI states sets. The UE 102 determines that the first TCI state set corresponds to the first PDCCH candidate, and the second TCI state set corresponds to the second PDCCH candidate. Therefore, the PDCCH on the first PDCCH candidate is monitored based on the first TCI state set, and the PDCCH on the second PDCCH candidate is monitored based on the second TCI state set.

In a possible implementation, monitoring the PDCCH on the PDCCH candidate based on the N TCI state sets includes: monitoring the PDCCH on the PDCCH candidate based on the joint TCI state and/or the downlink TCI state in the N TCI state sets. That is, the PDCCH on the candidate PDCCH corresponding to the TCI state set that only includes the uplink TCI state is not monitored.

In an example, the first indication information indicates two TCI state sets, and the UE 102 determines that the first TCI state set corresponds to the first PDCCH candidate, and determines that the second TCI state set corresponds to the second PDCCH candidate. Considering that the first TCI state set only includes the joint TCI state and the second TCI state set only includes the uplink TCI state, the PDCCH on the first PDCCH candidate is monitored based on the first TCI state set, the PDCCH on the second PDCCH candidate is not monitored.

When the first indication information indicates one TCI state set, the UE 102 monitors the PDCCH on the PDCCH candidate based on the one TCI state set.

In a possible implementation, a method for monitoring the PDCCH on the PDCCH candidate based on the one TCI state set includes: determining a first PDCCH candidate corresponding to the one TCI state set; and monitoring the PDCCH of the first PDCCH candidate based on the one TCI state set.

In one example, the first indication information indicates one TCI state set. The UE 102 determines that this TCI state set corresponds to the first PDCCH candidate. Considering that this TCI state set only includes the joint TCI state, the PDCCH on the first PDCCH candidate is monitored based on the first TCI state set.

In one possible implementation, a method for monitoring the PDCCH on the PDCCH candidate based on the one TCI state set includes: monitoring the PDCCH on the PDCCH candidate based on the joint TCI state and/or the downlink TCI state in the one TCI state set.

In one example, the first indication information indicates one TCI state set. This TCI state set only includes the uplink TCI state. When such a situation occurs, the UE may monitor the PDCCH on the PDCCH candidate based on the joint TCI state and/or the downlink TCI state indicated by the most recent first indication information.

In the embodiment of the disclosure, the network device sends the first configuration information to the UE to clearly indicate the N SS sets with the link relationship, so that the UE knows the different number of TCI state sets configured by the network device, and uses different blind detection methods to receive the PDCCH on the N SS sets with the link relationship, which enable the UE and the network device to have a consistent recognition of receiving the PDCCH in the scenario where the N SS sets have the link relationship, thus improving a transmission quality of the PDCCH.

A method for receiving configuration information is provided by the embodiments of the disclosure, and the method is performed by a UE. FIG. 3 is a schematic diagram of a method for receiving configuration information according to an exemplary embodiment. As illustrated in FIG. 3, the method includes steps S301-S303 as following.

At S301, first configuration information sent by the network device 101 is received.

The first configuration information is configured to configure N SS sets with a link relationship, the N SS sets with the link relationship correspond to respective PDCCH candidates, respectively, and the PDCCH candidate is configured to transmit PDCCH, where N is an integer greater than 1.

In some possible implementations, this method is applied to a usage scenario of M-TRP based on S-DCI.

In some possible implementations, the value of N is 2.

At step S302, first indication information sent by the network device 101 is received.

In some possible implementations, the first indication information includes MAC CE.

In some possible implementations, the first indication information includes MAC CE and DCI.

In some possible implementations, the first indication information is configured to indicate N TCI state sets.

In some possible implementations, the first indication information includes a group identifier corresponding to each TCI state set. The group identifier includes at least one of the following: a CORESET pool index, or a CORESET group identity, or a PUCCH group identity.

In some possible implementations, each TCI state in the N TCI state sets is configured to a transmission of at least one channel and/or signal. The channel includes at least one of a PDCCH, a PDSCH, a PUCCH, or a PUSCH. The signal includes at least one of a CSI-RS or a SRS.

In an example, each TCI state set in the N TCI state sets includes one or a pair of TCI states.

For example, one TCI state set includes a joint TCI state (also known as DLorJointTCI state), where the joint TCI state may be used for transmission of both uplink and downlink channels and/or signals.

For example, one TCI state set includes a downlink TCI state (also known as DLorJointTCI state), where the downlink TCI state may be used for the transmission of downlink channels and/or signals.

For example, one TCI state set includes an uplink TCI state (also known as UL-TCI state), where the uplink TCI state may be used for the transmission of uplink channels and/or signals.

For example, one TCI state set includes a pair of TCI states, which includes a downlink TCI state (also known as DLorJointTCI state) and an uplink TCI state. The downlink TCI state may be used for the transmission of downlink channels and/or signals, while the uplink TCI state may be used for the transmission of uplink channels and/or signals.

In an example, each TCI state set in the N TCI state sets only includes a joint TCI state (also known as DLorJointTCI state); or, each TCI state set in the N TCI state sets only includes at least one of a downlink TCI state (also known as DLorJointTCI state) or an uplink TCI state (also known as UL-TCI state).

In this example, if the TCI state is divided into two types, the first type is the joint TCI state, and the second type is a non-joint TCI state (which may be referred to as separate UL/DL TCI state). Each TCI state set in the N TCI state sets includes the TCI state with the same type, that is, all joint TCI states, or all non-joint TCI states.

In another example, a first TCI state set in the N TCI state sets only includes a joint TCI state; a second TCI state set in the N TCI state sets only includes at least one of a downlink TCI state and an uplink TCI state.

In this example, if the TCI state is divided into two types, the first type is the joint TCI state, and the second type is the non-joint TCI state (which may be referred to as separate UL/DL TCI state), at least two TCI state sets in the N TCI state sets contain different TCI state types.

In some possible implementations, the first indication information is configured to indicate one TCI state set.

It should be noted that this method does not limit the sending order of steps S301 and S302, and may receive step S302 first and then receive step S301.

Step S303, the UE 102 monitors the PDCCH on the PDCCH candidate based on the TCI state set indicated by the first indication information.

When the first indication information indicates N TCI state sets, the UE 102 monitors the PDCCH on the PDCCH candidate based on the N TCI state sets.

In a possible implementations, monitoring the PDCCH on the PDCCH candidate based on the N TCI state sets includes: determining the PDCCH candidate corresponding to each TCI state set; and monitoring the PDCCH of the corresponding PDCCH candidate based on each TCI state set.

In an example, the value of N is 2, and the first indication information indicates 2 TCI states sets. The UE 102 determines that the first TCI state set corresponds to the first PDCCH candidate, and the second TCI state set corresponds to the second PDCCH candidate. Therefore, the PDCCH on the first PDCCH candidate is monitored based on the first TCI state set, and the PDCCH on the second PDCCH candidate is monitored based on the second TCI state set.

In a possible implementation, monitoring the PDCCH on the PDCCH candidate based on the N TCI state sets includes: monitoring the PDCCH on the PDCCH candidate based on the joint TCI state and/or the downlink TCI state in the N TCI state sets. That is, the PDCCH on the candidate PDCCH corresponding to the TCI state set that only includes the uplink TCI state is not monitored.

In an example, the first indication information indicates two TCI state sets, and the UE 102 determines that the first TCI state set corresponds to the first PDCCH candidate, and determines that the second TCI state set corresponds to the second PDCCH candidate. Considering that the first TCI state set only includes the joint TCI state and the second TCI state set only includes the uplink TCI state, the PDCCH on the first PDCCH candidate is monitored based on the first TCI state set, the PDCCH on the second PDCCH candidate is not monitored.

In addition, the UE typically need to blindly detect the PDCCH on all possible PDCCH candidate within a time period (such as a time slot). If the blind detection of the PDCCH on all possible PDCCH candidate during this period results in a blind detection count greater than the maximum blind detection count supported by the terminal, the terminal needs to discard some PDCCH on certain PDCCH candidates according to priority, such as discarding PDCCH on PDCCH candidate in the SS set with a larger SS set ID.

When one PDCCH contains only one PDCCH candidate, the terminal requires the blind check count of 1, which is accumulated in the SS set corresponding to that PDCCH candidate. When one PDCCH contains two PDCCH candidates, such as a first PDCCH candidate and a second PDCCH candidate, where the first PDCCH candidate corresponds to the first SS set and the second PDCCH candidate corresponds to the second SS set, and the ID of the first SS set is less than the ID of the second SS set. If both of the two PDCCH candidates need to be blindly detected, for a first type of UE, where one PDCCH contains two PDCCH candidates, the blind detection count required for blindly detecting these two PDCCH candidates is 2. Correspondingly, in order to blindly detecting these two PDCCH candidates, it is needed to accumulate 1 on the blind detection count of the first SS set correspondingly, and to accumulate 1 on the blind detection count of the second SS set. For a second type of UE, where one PDCCH contains two PDCCH candidates, the required blind detection count for blindly detecting these two PDCCH candidates is 3. Therefore, correspondingly, in order to blindly detecting these two PDCCH candidates, it is needed to accumulate 1 on the blind detection count of the first SS set correspondingly, and to accumulate 2 on the blind detection count of the second SS set

In an implementation, when the PDCCH contains N (N greater than 1) PDCCH candidates, the blind detection count required by the UE for blind detection of N PDCCH candidates is N, and 1 is accumulated on blind detection count of the SS set corresponding to each PDCCH candidate.

Optionally, a step length value is positively correlated with an identifier of the SS set.

For example, a certain PDCCH that the UE needs to listen to contains 2 PDCCH candidates, each PDCCH candidate corresponding to one SS set, and when the blind detection count required for the UE to blindly detect these two PDCCH candidates is 2, and the UE blindly detects these two PDCCH candidates, the blind detection count of the first SS set corresponding to the first PDCCH candidate need to be accumulated by 1, and the blind detection count of the second SS set corresponding to the second PDCCH candidate need to be accumulated by 1.

In one implementation, when the UE blindly detects N (N greater than 1) PDCCH candidates, the blind detection count M required is greater than N. The step length value is accumulated on the blind detection count of the SS set corresponding to each PDCCH candidate, and a sum of the step length values accumulated on the blind detection counts of the N SS sets corresponding to the N PDCCH candidates is N.

For example, a certain PDCCH that the UE needs to listen to contains 2 PDCCH candidates, each PDCCH candidate corresponding to one SS set, and when the blind detection count required for the UE to blindly detect these two PDCCH candidates is 3, if the ID of the first SS set corresponding to the first PDCCH candidate is less than the ID of the second SS set corresponding to the second PDCCH candidate, the UE needs to accumulate 1 on the blind detection count of first SS set corresponding to the first PDCCH candidate, and accumulate 2 on the blind detection count of the second SS set corresponding to the second PDCCH candidate when the UE blindly detects these two PDCCH candidates.

Below is an example to illustrate the processing method when the first indication information indicates two TCI state sets. The two TCI state sets indicated by the first indication information correspond to two PDCCH candidates, and each TCI state set corresponds to one PDCCH candidate. Each TCI state set contains either the joint TCI state or the downlink TCI state.

When the blind detection count required for the UE to blindly detect one PDCCH containing 2 PDCCH candidates is 2, after performing one monitoring for the two PDCCH candidates, the blind detection counts corresponding to the SS sets are accumulated by 1.

When the blind detection count required for the UE to blindly detect one PDCCH containing 2 PDCCH candidates is 3, after performing one monitoring for the two PDCCH candidates, the blind detection count corresponding to the SS set with a smaller ID is accumulated by 1; and the blind detection count corresponding to the SS set with a larger SS ID is accumulated by 2.

For example, when the SS ID of the first SS set of the first PDCCH candidate is smaller than the SS IS of the second SS set of the second PDCCH candidate, after performing one monitoring on the first and second PDCCH candidates, the blind detection count corresponding to the first SS set is accumulated by 1; and the blind detection count corresponding to the second SS set is accumulated by 2.

When the first indication information indicates one TCI state set, the UE 102 monitors the PDCCH on the PDCCH candidate based on the one TCI state set.

In one possible implementation, monitoring the PDCCH on the PDCCH candidate based on the one TCI state set includes: determining a first PDCCH candidate corresponding to the one TCI state set; and monitoring the PDCCH on the first PDCCH candidate based on the one TCI state set, and do not monitoring the PDCCH on other PDCCH candidates except for the first candidate. Specifically, the TCI state set includes the joint TCI state or the downlink TCI state.

The first PDCCH candidate is the PDCCH candidate corresponding to the TCI state set.

In addition, regarding determining the blind detection count, the method further includes: monitoring, based on the one TCI state set, the PDCCH on the first PDCCH candidate, determining that monitoring has been performed on the first PDCCH candidate, and determining that monitoring has not been performed on other PDCCH candidates except for the first PDCCH candidate. Correspondingly, after monitoring the PDCCH on the first PDCCH candidate based on the one TCI state set, the blind detection count of the first SS set corresponding to the first PDCCH candidate is accumulated by 1, and the blind detection count of a SS set corresponding to a PDCCH candidate other than the first PDCCH candidate is not performed by accumulation

Due to the fact that the UE uses one TCI state set for the PDCCH transmission, i.e. the UE uses this TCI state set to receive the first PDCCH candidate corresponding to the TCI state set, and does not need to receive another PDCCH candidate (i.e. the second PDCCH candidate). Therefore, when calculating the blind detection count, for the reception of this PDCCH, the blind detection count of the SS set corresponding to the first PDCCH candidate is accumulated by 1, and the blind detection count of the SS set corresponding to the second PDCCH candidate does not need to be accumulated.

In an example, one PDCCH contains two PDCCH candidates, namely the first PDCCH candidate and the second PDCCH candidate. However, since the first indication information only indicates the TCI state set corresponding to the first PDCCH candidate among the two PDCCH candidates, during the process of monitoring the PDCCH on the PDCCH candidate based on this one TCI state set, the UE only performs the blind detection for the PDCCH on the first PDCCH candidate, and determines not to perform the blind detection for the PDCCH on the second PDCCH candidate. Correspondingly, the blind detection count of the first SS set corresponding to the first PDCCH candidate is accumulated by 1, and the blind detection count of the second SS set corresponding to the second PDCCH candidate does not perform accumulation.

For example, when the blind detection count required for the UE to blind detect one PDCCH containing two PDCCH candidates is greater than 1 (such as 2 or 3), after monitoring the PDCCH on the first PDCCH candidate based on the one TCI state set, the blind detection count of the first SS set corresponding to the first PDCCH candidate is accumulated by 1, and the blind detection count of the second SS set corresponding to the second PDCCH candidate does not perform accumulation.

Specifically:
when the blind detection count required for the UE to blind detect one PDCCH containing two PDCCH candidates is 2, after monitoring the PDCCH on the first PDCCH candidate based on the one TCI state set, the blind detection count of the first SS set corresponding to the first PDCCH candidate is accumulated by 1, and the blind detection count of the second SS set corresponding to the second PDCCH candidate does not perform accumulation (if blind detection is also performed on the PDCCH on the first PDCCH candidate, the accumulated step length of the blind detection count of the second SS set is 1).

When the blind detection count required for the UE to blind detect one PDCCH containing two PDCCH candidates is 3, regardless of whether the SS ID of the SSset corresponding to the first PDCCH candidate is smaller or larger than the SS ID of the SSset corresponding to the second PDCCH candidate, after monitoring the PDCCH on the first PDCCH candidate based on the one TCI state set, the blind detection count of the first SS set corresponding to the first PDCCH candidate is accumulated by 1, and the blind detection count of the second SS set corresponding to the second PDCCH candidate does not perform accumulation.

In one possible implementation, monitoring the PDCCH on the PDCCH candidate based on the one TCI state set includes:

monitoring the PDCCH on the PDCCH candidate based on a joint TCI state and/or a downlink TCI state in the one TCI state set.

In an example, the first indication information indicates one TCI state set. This TCI state set only includes uplink TCI state. When this situation occurs, the UE may receive the PDCCH based on the joint TCI state and/or downlink TCI state indicated by the most recent first indication information.

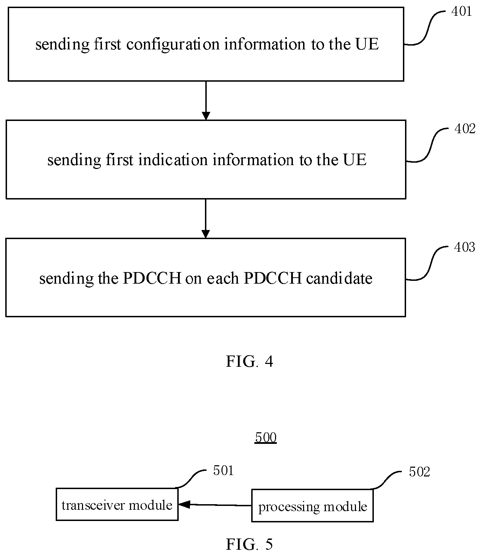

A method for sending configuration information is provided by the embodiments of the disclosure, and the method is performed by a network device. FIG. 4 is a schematic diagram of a method for sending configuration information according to an exemplary embodiment. As illustrated in FIG. 4, the method includes steps S401-S403 as following.

At S401: first configuration information is sent to the UE 102.

The first configuration information is configured to configure N SS sets with a link relationship, the N SS sets with the link relationship correspond to PDCCH candidates, respectively, and the PDCCH candidate is configured for PDCCH transmission, where N is an integer greater than 1.

In some possible implementations, this method is applied to a usage scenario of M-TRP based on S-DCI.

In some possible implementations, the value of N is 2.

At S402: first indication information is sent to the UE 102.

In some possible implementations, the first indication information includes MAC CE.

In some possible implementations, the first indication information includes MAC CE and DCI.

In some possible implementations, the first indication information is configured to indicate N TCI state sets.

In some possible implementations, the first indication information includes a group identifier corresponding to each TCI state set. The group identifier includes at least one of the following: a CORESET pool index, or a CORESET group identity, or a PUCCH group identity.

In some possible implementations, each TCI state in the N TCI state sets is configured to a transmission of at least one channel and/or signal. The channel includes at least one of a PDCCH, a PDSCH, a PUCCH, or a PUSCH. The signal includes at least one of a CSI-RS or a SRS.

In an example, each TCI state set in the N TCI state sets includes one or a pair of TCI states.

For example, one TCI state set includes a joint TCI state (also known as DLorJointTCI state), where the joint TCI state may be used for transmission of both uplink and downlink channels and/or signals.

For example, one TCI state set includes a downlink TCI state (also known as DLorJointTCI state), where the downlink TCI state may be used for the transmission of downlink channels and/or signals.

For example, one TCI state set includes an uplink TCI state (also known as UL-TCI state), where the uplink TCI state may be used for the transmission of uplink channels and/or signals.

For example, one TCI state set includes a pair of TCI states, which includes a downlink TCI state (also known as DLorJointTCI state) and an uplink TCI state. The downlink TCI state may be used for the transmission of downlink channels and/or signals, while the uplink TCI state may be used for the transmission of uplink channels and/or signals.

In an example, each TCI state set in the N TCI state sets only includes a joint TCI state (also known as DLorJointTCI state); or, each TCI state set in the N TCI state sets only includes at least one of a downlink TCI state (also known as DLorJointTCI state) or an uplink TCI state (also known as UL-TCI state).

In this example, if the TCI state is divided into two types, the first type is the joint TCI state, and the second type is a non-joint TCI state (which may be referred to as separate UL/DL TCI state). Each TCI state set in the N TCI state sets includes the TCI state with the same type, that is, all joint TCI states, or all non-joint TCI states.

In another example, a first TCI state set in the N TCI state sets only includes a joint TCI state; a second TCI state set in the N TCI state sets only includes at least one of a downlink TCI state and an uplink TCI state.

In this example, if the TCI state is divided into two types, the first type is the joint TCI state, and the second type is the non-joint TCI state (which may be referred to as separate UL/DL TCI state), at least two TCI state sets in the N TCI state sets contain different TCI state types.

In some possible implementations, the first indication information is configured to indicate one TCI state set.

It should be noted that this method does not limit the sending order of steps S401 and S402, and may send step S402 first and then send step S401.

Step S403, the PDCCH is sent on each PDCCH candidate.

Based on the same concept as the above method embodiments, the embodiments of the application also provides a communication apparatus that may have the functions of the UE 102 in the above method embodiments and can be configured to perform the steps provided by the UE 102 in the above method embodiments. This function may be implemented through hardware, or by executing, by hardware, corresponding software. The hardware or software includes one or more modules corresponding to the above functions.

In one possible implementation, the communication apparatus 500 shown in FIG. 5 may serve as the UE involved in the above method embodiments and execute the steps performed by the UE in the above method embodiments. As shown in FIG. 5, the communication apparatus 500 may include a transceiver module 501 and a processing module 502 coupled to each other. The transceiver module 501 may be configured to support the communication apparatus 500 to perform communication. The transceiver module 501 may have wireless communication functions, such as being able to communicate wirelessly with other communication apparatuses through a wireless air interface. The processing module 502 may be configured to support the communication apparatus 500 to perform the processing actions in the above method embodiments, including but not limited to: generating information and messages sent by the transceiver module 501, and/or demodulating and decoding the signals received by the transceiver module 501, etc.

When executing the steps implemented by the UE 102, the transceiver module 501 is configured to receive first configuration information, which is configured to configure N SS sets with a link relationship. The N SS sets with the link relationship correspond to PDCCH candidates, respectively, and the PDCCH candidate is configured to for PDCCH transmission, where N is an integer greater than 1.

In some possible implementations, the transceiver module 501 is also configured to receive first indication information, in which the first indication information indicates N sets of TCI states; and the first indication information is also configured to monitor the PDCCH on the candidate PDCCH based on the N TCI state sets.

In some possible implementations, the transceiver module 501 is also configured for monitoring the PDCCH on the PDCCH candidate based on a joint TCI state and/or a downlink TCI state in the N TCI state sets.

In some possible implementations, the processing module 502 is also configured for determining the PDCCH candidate corresponding to each TCI state set; and monitoring, based on each TCI state set, the PDCCH on the PDCCH candidate corresponding to the TCI state set.

In some possible implementations, each TCI state set in the N TCI state sets only comprises a joint TCI state; or, each TCI state set in the N TCI state sets only comprises at least one of a downlink TCI state or an uplink TCI state.

In some possible implementations, a first TCI state set in the N TCI state sets only comprises a joint TCI state; and a second TCI state set in the N TCI state sets only comprises at least one of a downlink TCI state or an uplink TCI state.

In some possible implementations, each TCI state in the N TCI state sets is configured for a transmission of at least one channel and/or signal; the channel comprises at least one of a PDCCH, a PDSCH, a PUCCH, or a PUSCH; and the signal comprises at least one of a CSI-RS or a SRS.

In some possible implementations, the transceiver module 501 is also configured for receiving first indication information for indicating one TCI state set; and monitoring the PDCCH on the PDCCH candidate based on the one TCI state set.

In some possible implementations, the transceiver module 501 is also configured for monitoring the PDCCH on the PDCCH candidate based on a joint TCI state and/or a downlink TCI state in the one TCI state set.

In some possible implementations, the processing module 502 is also configured for determining a first PDCCH candidate corresponding to the one TCI state set; and the transceiver module 501 is also configured for monitoring the PDCCH on the first PDCCH candidate based on the one TCI state set.

In some possible implementations, the processing module 502 is also configured for after monitoring the PDCCH on the first PDCCH candidate based on the one TCI state set, accumulating 1 on a blind detection count of a first SS set corresponding to the first PDCCH candidate.

In some possible implementations, the processing module 502 is also configured for withholding performing accumulation on a blind detection count of an SS set corresponding to a PDCCH candidate other than the first PDCCH candidate.

In some possible implementations, the processing module 502 is also configured for accumulating 1 on a blind detection count of a first SS set corresponding to the first PDCCH candidate, and withholding performing accumulation on a blind detection count of a second SS set corresponding to a second PDCCH candidate.

In some possible implementations, the first indication information comprises a MAC CE, or the first indication information comprises an MAC CE and DCI.

In some possible implementations, the first indication information comprises a group identity corresponding to each TCI state set.

In some possible implementations, the group identity comprises at least one of: a CORESET pool index, or a CORESET group identity, or a PUCCH group identity.

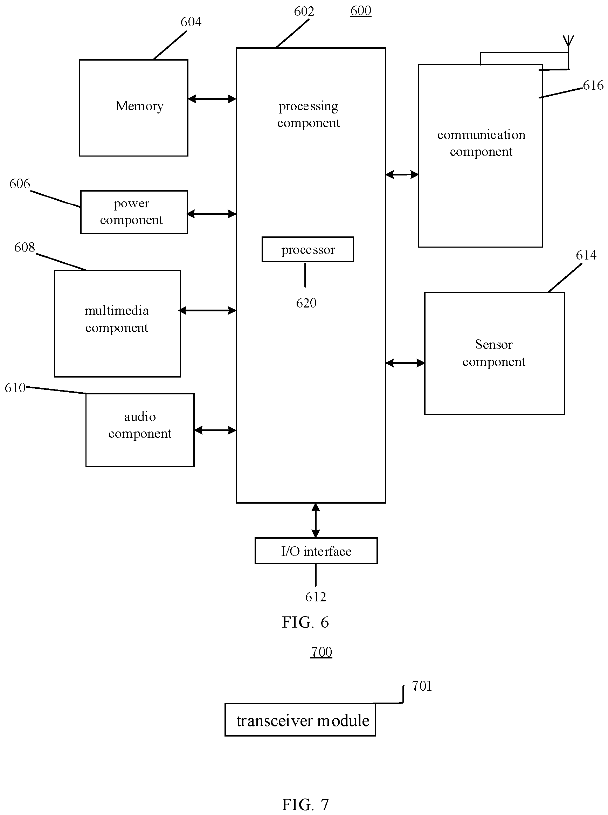

The structure of the UE 102 can also be as shown in FIG. 6. Apparatus 600 can be may be a mobile phone, a computer, a digital broadcasting terminal, a message transceiver device, a game console, a tablet device, a medical device, a fitness device or a personal digital assistant.

As illustrated in FIG. 6, the apparatus 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, telephone calls, data communications, camera operations, and recording operations. The processing component 602 may include one or more processors 620 to perform all or part of the steps in the above described method. Moreover, the processing component 602 may include one or more modules which facilitate the interaction between the processing component 602 and other components. For example, the processing component 602 may include a multimedia module to facilitate the interaction between the multimedia component 608 and the processing component 602.

The memory 604 is configured to store various types of data to support the operation of the apparatus 600. Examples of such data include instructions for any applications or methods operated on the apparatus 600, contact data, phonebook data, messages, pictures, video, etc. The memory 604 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 606 provides power to various components of the apparatus 600. The power component 606 may include a power management system, one or more power sources, and any other components associated with the generation, management, and distribution of power in the apparatus 600.

The multimedia component 608 includes a screen providing an output interface between the apparatus 600 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 608 includes a front-facing camera and/or a rear-facing camera. When the apparatus 600 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 610 is configured to output and/or input audio signals. For example, the audio component 610 includes a microphone (MIC) configured to receive an external audio signal when the apparatus 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the apparatus 600. For instance, the sensor component 614 may detect an open/closed status of the apparatus 600, relative positioning of components, e.g., the display and the keypad, of the apparatus 600, a change in position of the apparatus 600 or a component of the apparatus 600, a presence or absence of user contact with the apparatus 600, an orientation or an acceleration/deceleration of the apparatus 600, and a change in temperature of the apparatus 600. The sensor component 614 may include a proximity sensor configured to detect the presence of nearby objects without any physical contact. The sensor component 614 may also include a light sensor, such as a Complementary Metal Oxide Semiconductor (CMOS) or Charge-Coupled Device (CCD) image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the apparatus 600 and other devices. The apparatus 600 can access a wireless network based on a communication standard, such as Wi-Fi, 2G or 3G, or a combination thereof. In an exemplary embodiment, the communication component 616 receives a broadcast signal or broadcast associated information from an external broadcast management system via a broadcast channel. In an exemplary embodiment, the communication component 616 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In some embodiments, the apparatus 600 may be implemented with one or more ASICs, DSPs, Digital Signal Processing Devices (DSPDs), PLDs, FPGAs, controllers, microcontrollers, microprocessors or other electronic components, for performing the above described method.

In some exemplary embodiments, there is also provided a non-transitory computer readable storage medium including instructions, such as the memory 604, executable by the processor 620 in the apparatus 600, for performing the above method. For example, the non-transitory computer-readable storage medium may be a ROM, a Random Access Memory (RAM), a CD-ROM, a magnetic tape, a floppy disc, and an optical data storage device.

Based on the same concept as the above method embodiments, the present embodiment also provides a communication apparatus that may have the functions of the network device 101 in the above method embodiments and may be configured to perform the steps provided by the network device 101 in the above method embodiments. This function may be implemented through hardware, or by executing, by hardware, corresponding software. The hardware or software includes one or more modules corresponding to the above functions.

In one possible implementation, the communication apparatus 700 shown in FIG. 7 may serve as the network device involved in the above method embodiments and execute the steps performed by the network device in the above method embodiments. As shown in FIG. 7, the communication apparatus 700 may include a transceiver module 701. The transceiver module 701 may be configured to support the communication apparatus 700 to perform communication. The transceiver module 701 may have wireless communication functions, such as being able to communicate wirelessly with other communication apparatuses through a wireless air interface.

When executing the steps implemented by the network device 102, the transceiver module 701 is configured to send first configuration information, in which the first configuration information is configured to configure N SS sets with a link relationship, the N SS sets with the link relationship correspond to PDCCH candidates, respectively, and the PDCCH candidate is configured for PDCCH transmission, where N is an integer greater than 1.

In some possible implementation, the transceiver module 701 is configured for sending first indication information for indicating N TCI state sets.

In some possible implementation, each TCI state set in the N TCI state sets only comprises a joint TCI state; or, each TCI state set in the N TCI state sets only comprises at least one of a downlink TCI state or an uplink TCI state.

In some possible implementation, a first TCI state set in the N TCI state sets only comprises a joint TCI state; and a second TCI state set in the N TCI state sets only comprises at least one of a downlink TCI state or an uplink TCI state.

In some possible implementation, each TCI state in the N TCI state sets is configured to a transmission of at least one channel and/or signal, the channel comprises at least one of a PDCCH, a PDSCH, a PUCCH, or a PUSCH; and the signal comprises at least one of a CSI-RS or a SRS.

In some possible implementation, the transceiver module 701 is configured for sending first indication information for indicating one TCI state set.

In some possible implementation, the first indication information comprises a MAC CE, or the first indication information comprises an MAC CE and DCI.

In some possible implementation, the first indication information comprises a group identity corresponding to each TCI state set.

In some possible implementation, the group identity comprises at least one of: a CORESET pool index, or a CORESET group identity, or a PUCCH group identity.

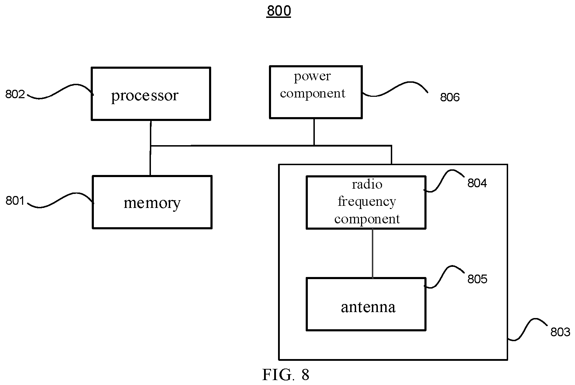

When the communication apparatus is the network device, its structure can also be as shown in FIG. 8. Using network device 101 being the base station as an example to illustrate the structure of the communication apparatus. As shown in FIG. 8, an apparatus 800 includes a memory 801, a processor 802, a transceiver component 803, and a power component 806. The memory 801 is coupled to the processor 802 and may be configured to store the necessary programs and data for the communication apparatus 800 to implement various functions. The processor 802 is configured to support the communication apparatus 800 to perform the corresponding functions in the above method, which can be achieved by calling the program stored in the memory 801. The transceiver component 803 may be a wireless transceiver, which may be configured to support the communication apparatus 800 to receive signaling and/or data through a wireless air interface, as well as to send signaling and/or data. The transceiver component 803 may also be referred to as a transceiver unit or communication unit. The transceiver component 803 may include a radio frequency component 804 and one or more antennas 805, where the radio frequency component 804 may be a remote radio unit (RRU), specifically used for transmitting radio frequency signals and converting between radio frequency signals with baseband signals. The one or more antennas 805 may be configured for radiating and receiving radio frequency signals.

When the communication apparatus 800 needs to send data, the processor 802 may perform baseband processing on the data to be sent and output the baseband signal to the RU. After the baseband signal is processed by the RU, the RF signal is transmitted in the form of electromagnetic wave through the antenna. When data is sent to the communication apparatus 800, the RU receives the RF signal through the antenna, converts the RF signal into the baseband signal, and outputs the baseband signal to the processor 802. The processor 802 converts the baseband signal into data and processes the data.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

### Industrial applicability

The network device sends the first configuration information to the UE to clearly indicate the N search space sets with the link relationship, so that the UE knows the different number of TCI state sets configured by the network device, and uses different blind detection methods to receive the PDCCH on the N SS sets with the link relationship, which enable the UE and the network device to have a consistent recognition of receiving the PDCCH in the scenario where the N SS sets have the link relationship, thus improving a transmission quality of the PDCCH.

## Claims

1. A method for receiving configuration information, performed by a user equipment (UE), comprising:
receiving first configuration information, wherein the first configuration information is configured to configure N search space (SS) sets with a link relationship, the N SS sets with the link relationship correspond to physical downlink control channel (PDCCH) candidates, respectively, and the PDCCH candidate is configured to for PDCCH transmission, where N is an integer greater than 1.

2. The method of claim 1, further comprising:
receiving first indication information for indicating N transmission configuration indication (TCI) state sets; and
monitoring the PDCCH on the PDCCH candidate based on the N TCI state sets.

3. The method of claim 2, wherein monitoring the PDCCH on the PDCCH candidate based on the N TCI state sets comprises:
monitoring the PDCCH on the PDCCH candidate based on a joint TCI state and/or a downlink TCI state in the N TCI state sets.

4. The method of claim 2 or 3, wherein monitoring the PDCCH on the PDCCH candidate based on the N TCI state sets comprises:
determining the PDCCH candidate corresponding to each TCI state set; and
monitoring, based on each TCI state set, the PDCCH on the PDCCH candidate corresponding to the TCI state set.

5. The method of any one of claims 2 to 4, wherein
each TCI state set in the N TCI state sets only comprises a joint TCI state;
or, each TCI state set in the N TCI state sets only comprises at least one of a downlink TCI state or an uplink TCI state.

6. The method of any one of claims 2 to 4, wherein
a first TCI state set in the N TCI state sets only comprises a joint TCI state; and
a second TCI state set in the N TCI state sets only comprises at least one of a downlink TCI state or an uplink TCI state.

7. The method of any one of claims 2 to 4, wherein
each TCI state in the N TCI state sets is configured for a transmission of at least one channel and/or signal;
the channel comprises at least one of a PDCCH, a physical downlink share channel (PDSCH), a physical uplink control channel (PUCCH), or a physical uplink share channel (PUSCH); and
the signal comprises at least one of a channel state information-reference signal (CSI-RS) or a sounding reference signal (SRS).

8. The method of claim 1, further comprising:
receiving first indication information for indicating one TCI state set; and
monitoring the PDCCH on the PDCCH candidate based on the one TCI state set.

9. The method of claim 8, wherein monitoring the PDCCH on the PDCCH candidate based on the one TCI state set comprises:
monitoring the PDCCH on the PDCCH candidate based on a joint TCI state and/or a downlink TCI state in the one TCI state set.

10. The method of claim 8, wherein monitoring the PDCCH on the PDCCH candidate based on the one TCI state set comprises:
determining a first PDCCH candidate corresponding to the one TCI state set; and
monitoring the PDCCH on the first PDCCH candidate based on the one TCI state set.

11. The method of claim 10, further comprising:
after monitoring the PDCCH on the first PDCCH candidate based on the one TCI state set, accumulating 1 on a blind detection count of a first SS set corresponding to the first PDCCH candidate.

12. The method of claim 11, further comprising:
withholding performing accumulation on a blind detection count of an SS set corresponding to a PDCCH candidate other than the first PDCCH candidate.

13. The method of claim 10, further comprising:
accumulating 1 on a blind detection count of a first SS set corresponding to the first PDCCH candidate, and withholding performing accumulation on a blind detection count of a second SS set corresponding to a second PDCCH candidate.

14. The method of any one of claims 2 to 13, wherein the first indication information comprises a media access control control element (MAC CE), or the first indication information comprises an MAC CE and downlink control information (DCI).

15. The method of any one of claims 2 to 13, wherein the first indication information comprises a group identity corresponding to each TCI state set.

16. The method of claim 15, wherein the group identity comprises at least one of:
a control resource set (CORESET) pool index, or a CORESET group identity, or a PUCCH group identity.

17. A method for sending configuration information, performed by a network device, comprising:
sending first configuration information, wherein the first configuration information is configured to configure N search space (SS) sets with a link relationship, the N SS sets with the link relationship correspond to physical downlink control channel (PDCCH) candidates, respectively, and the PDCCH candidate is configured for PDCCH transmission, where N is an integer greater than 1.

18. The method of claim 17, further comprising:
sending first indication information for indicating N transmission configuration indication (TCI) state sets.

19. The method of claim 18, wherein each TCI state set in the N TCI state sets only comprises a joint TCI state; or, each TCI state set in the N TCI state sets only comprises at least one of a downlink TCI state or an uplink TCI state.

20. The method of claim 18, wherein a first TCI state set in the N TCI state sets only comprises a joint TCI state; and a second TCI state set in the N TCI state sets only comprises at least one of a downlink TCI state or an uplink TCI state.

21. The method of claim 18, wherein each TCI state in the N TCI state sets is configured to a transmission of at least one channel and/or signal, the channel comprises at least one of a PDCCH, a physical downlink share channel (PDSCH), a physical uplink control channel (PUCCH), or a physical uplink share channel (PUSCH); and the signal comprises at least one of a channel state information-reference signal (CSI-RS) or a sounding reference signal (SRS).

22. The method of claim 17, further comprising:
sending first indication information for indicating one TCI state set.

23. The method of any one of claims 17 to 22, wherein the first indication information comprises a media access control control element (MAC CE), or the first indication information comprises an MAC CE and downlink control information (DCI).

24. The method of any one of claims 17 to 22, wherein the first indication information comprises a group identity corresponding to each TCI state set.

25. The method of claim 24, wherein the group identity comprises at least one of: a control resource set (CORESET) pool index, or a CORESET group identity, or a PUCCH group identity.

26. An apparatus for receiving configuration information, configured on a user equipment (UE), comprising:
a transceiver module, configured for receiving first configuration information, wherein the first configuration information is configured to configure N search space (SS) sets with a link relationship, the N SS sets with the link relationship correspond to physical downlink control channel (PDCCH) candidates, respectively, and the PDCCH candidate is configured for PDCCH transmission, where N is an integer greater than 1.

27. An apparatus for sending configuration information, configured on a network device, comprising:
a transceiver module, configured for sending first configuration information, wherein the first configuration information is configured to configure N search space (SS) sets with a link relationship, the N SS sets with the link relationship correspond to physical downlink control channel (PDCCH) candidates, respectively, and the PDCCH candidate is configured for PDCCH transmission, where N is an integer greater than 1.

28. An electronic device, comprising a processor and a memory, wherein,
the memory is configured to store a computer program; and
the processor is configured to execute the computer program to implement the method of any one of claims 1-16.

29. A communication apparatus, comprising a processor and a memory, wherein,
the memory is configured to store a computer program; and
the processor is configured to execute the computer program to implement the method of any one of claims 17-25.

30. A computer-readable storage medium having an instruction stored thereon, wherein when the instruction is called and executed on a computer, the computer performs the method of any one of claims 1-16.

31. A computer-readable storage medium having an instruction stored thereon, wherein when the instruction is called and executed on a computer, the computer performs the method of any one of claims 17-25.
